# EUROPÄISCHE PATENTSCHRIFT

(11) **EP 3 953 665 B1**
(45) Veröffentlichungstag und Bekanntmachung des Hinweises auf die Patenterteilung: **18.06.2025**
(21) Anmeldenummer: 20716415.3
(22) Anmeldetag: 27.03.2020
(51) Int. Cl.: G01D 11/30

(54) **HYGIENEGERECHTER ROHRADAPTER**
HYGIENIC TUBE ADAPTER
ADAPTATEUR TUBULAIRE HYGIÉNIQUE

(30) Priorität: 12.04.2019 DE 102019109787
(43) Veröffentlichungstag der Anmeldung: 16.02.2022
(73) Patentinhaber: Endress+Hauser SE+Co. KG, 79689 Maulburg (DE)
(72) Erfinder: SCHMIDT, Robert, 79650 Schopfheim (DE)
(74) Vertreter: Endress + Hauser Group Services (Deutschland) AG+Co. KG
(86) Internationale Anmeldenummer: PCT/EP2020/058770
(87) Internationale Veröffentlichungsnummer: WO 2020/207827

(56) Entgegenhaltungen:
- WO-A1-2009/119132
- DE-A1- 102017 115 139
- JP-A- H0 712 605
- US-A1- 2009 188 328

## Beschreibung

Die Erfindung betrifft einen Rohradapter zum Führen eines Mediums mit den Merkmalen des Oberbegriffs des ersten Anspruchs, eine Anordnung zur Bestimmung und/oder Überwachung zumindest einer Prozessgröße mit einem Sensor und einem erfindungsgemäßen Rohradapter, sowie ein Verfahren zur Herstellung eines erfindungsgemäßen Rohradapters. Der Sensor ist dabei insbesondere in den Rohradapter einbringbar, welcher wiederum beispielsweise in ein bestehendes Rohrleitungssystem integriert werden kann.

Einen gattungsgemäßen Rohradapter beschreibt die DE 10 2017 115 139 A1.

Messanordnungen mit einem Sensor und einem Rohradapter werden in der Automatisierungstechnik im Zusammenhang mit einer Vielzahl von Messgeräten und/oder Feldgeräten zur Bestimmung unterschiedlicher Prozessgrößen eingesetzt, welche in großer Vielfalt von der Anmelderin hergestellt und vertrieben werden. Die Prozessgröße ist beispielsweise der Durchfluss oder der Füllstand eines strömenden Fluids, oder auch der Druck, die Dichte, die Viskosität, die Leitfähigkeit, die Temperatur oder der pH-Wert eines Fluids. Aber auch optische Sensoren, wie Trübungs- oder Absorptionssensoren sind bekannt und fallen unter die vorliegende Erfindung.

Die Sensoren werden in vielen Fällen mittels geeigneter Dichtungsmechanismen form- und/oder kraftschlüssig in die Rohradapter integriert oder auch direkt damit verschweißt und/oder verklebt. Fern sind dem Fachmann zahlreiche Mittel bekannt, mittels denen ein Rohradapter in ein bestehendes Rohrleitungssystem integriert werden kann.

Beim Einbringen des jeweiligen Sensors in einen Rohradapter können nachteilige Spalte, Fugen und/oder Toträume entstehen. Für eine Reihe von Anwendungen, wie in der sterilen Verfahrenstechnik, beispielsweise im Bereich der Pharmazie, Nahrungs- und/oder Lebensmittelindustrie, sind solche Spalte, Fugen und/oder Toträume zwischen den einzelnen Komponenten nicht oder nur in sehr begrenztem Maße akzeptabel. In solchen Verbindungsbereichen finden sich nämlich potentielle Sammelbecken für gesundheitsgefährdende Keime. Um beispielsweise Ablagerungen bzw. die Bildung eines Biofilms innerhalb einer Rohrleitung zu verhindern, sollte eine möglichst rückstandsfreie Reinigung gewährleistet werden.

In diesem Zusammenhang haben verschiedene internationale oder nationale Kontrollbehörden Standards, u. a. für die Herstellung, und Ausgestaltung von für die sterile Verfahrenstechnik zugelassenem Equipment erarbeitet. Beispielhaft sei hier auf die jeweiligen Standards der "American Society of Mechanical Engineers" (ASME), insbesondere auf den sog. "ASME Bioprocessing Equipment - Standard" (BPE), der "3-A Sanitary Standards Incorporation" (3-A), oder auch der "European Hygienic Design Group" (EHEDG) verwiesen. Die Standards gemäß ASME, BPE und 3A sind dabei insbesondere für den amerikanischen Raum relevant, während der Standard gemäß EHEDG mehrheitlich in Europa zum Tragen kommt. Typische in diesen Standards formulierte Anforderungen an ein Bauteil betreffen insbesondere die Geometrie und/oder Oberfläche des jeweiligen Bauteils, welches derart beschaffen sein sollte, dass sich keine Ablagerungen bilden können und das jeweilige Bauteil einfach zu reinigen und/oder sterilisieren ist. Beispielsweise sollten keine schmalen Spalte auftreten.

In Bezug auf mit diesen Standards konforme Messgeräte sei beispielsweise auf der DE102013100158A1 verwiesen, die eine einstückige Vorrichtung mit einem Sensor und einem Rohrleitungsabschnitt mit T-Form beschreibt. Der Sensor ist in einem Teilbereich des Adapters so angeordnet, dass die dem Medium zugewandte Stirnfläche des Sensors frontbündig zu der Innenfläche des ersten Teilbereichs des Adapters liegt. Die Stirnfläche des Sensors ist also quasi integraler Teil der Innenfläche des ersten Teilbereichs des Adapters.

Aus der DE102016121643A1 ist ferner eine Messanordnung mit einem Sensor bekannt geworden, welcher in eine Öffnung eines Rohrleitungsabschnitts lösbar einbringbar ist. Zur Vermeidung von Spalten in den Verbindungsbereichen ist zumindest eine Komponente des Sensors so ausgestaltet, dass sie im eingebauten Zustand frontbündig mit einer Innenwandung des Rohrleitungsabschnitts abschließt. Die zumindest eine Komponente des Sensors wird also an eine Geometrie des Rohrleitungsabschnitts angepasst.

Die DE102017115139A1 wiederum beschreibt ein Messrohr, welches derart ausgestaltet ist, dass in einem Übergangsbereich zwischen einem Rohrleitungsabschnitt und einem damit verbundenen rohrförmigen Körper sich alle Punkte zumindest eines ersten Teilbereichs der Wandung, insbesondere Innenwandung, des Rohrleitungsabschnitts, welcher die Öffnung definiert, in einer Ebene befinden. Auf diese Weise wird ein spalt- und totraumfreier Übergang zwischen dem jeweiligen Sensor und dem Messrohr erreicht.

Messrohre, die für die Elektroden eines MID ausgestaltet sind, lassen sich der WO 2009/119132 A1, der US 2009/0188328 A1 oder der JP H07 12605 A entnehmen.

Ausgehend vom genannten Stand der Technik liegt der vorliegenden Erfindung die Aufgabe zugrunde, eine Messstelle bereitzustellen, welche auf besonders einfache Weise den üblichen Hygiene-Anforderungen gerecht wird.

Diese Aufgabe wird gelöst durch den Rohradapter gemäß Anspruch 1, durch die Anordnung nach Anspruch 6 und durch das Verfahren nach Anspruch 8.

Hinsichtlich des Rohradapters wird die Aufgabe gelöst durch einen Rohradapter mit den Merkmalen des ersten Anspruchs. Im Fall, dass der zweite Kanal bezüglich seiner Längsachse senkrecht zur Längsachse des ersten Kanals angeordnet ist, handelt es sich bei dem Rohradapter um ein T-Stück.

Die Ausformungen dienen dazu, Toträume und/oder Spalte im Übergangsbereich, insbesondere im Falle, dass eine Vorrichtung zur Bestimmung und/oder Überwachung einer Prozessgröße in den Rohradapter eingebracht ist, zu verhindern. Eine Ausformung im Sinne der vorliegenden Erfindung ist ein vorgebbares Volumen des Rohrleitungsabschnitts im Übergangsbereich, welches aus den Wandungen des ersten und/oder zweiten Kanals entfernt wird. Die genaue Geometrie der Ausformung ist unter anderem abhängig von der Geometrie des Rohrleitungsabschnitts sowie vom jeweils angewendeten Herstellungsverfahren.

Die Wandungen der beiden rohrförmigen Kanäle sind üblicherweise gewölbt ausgebildet, insbesondere weisen sie kreisrunde Querschnittsflächen auf. Entsprechend ist die Öffnung, durch welche die beiden Kanäle miteinander verbunden sind, ebenfalls gewölbt ausgebildet. Dies kann nachteilig zur Bildung von Ablagerungen im Übergangsbereich zwischen dem Rohradapter und einer in den Rohradapter eingebrachten Vorrichtung führen. Durch die zumindest zwei Ausformungen im Übergangsbereich zwischen den beiden Kanälen können solche nachteiligen Effekte jedoch deutlich reduziert werden. So gewährleistet die erfindungsgemäße Ausgestaltung des Rohradapters einen spalt- und/oder totraumfreien Übergang zwischen der Wandung, insbesondere Innenwandung des ersten Kanals und einer in den zweiten Kanal einbringbaren Komponente eines Messgeräts.

Vorteilhaft bedarf es zur Einhaltung der gängigen Hygieneanforderungen keiner weiteren Modifikation des jeweiligen Sensors. Die Komponente, bzw. eine Stirnfläche der Komponente des Sensors, kann so angeordnet werden, dass diese im Wesentlichen frontbündig mit der Wandung des ersten Kanals im Bereich der Öffnung, an oder in welche der zweite Kanal mündet, abschließt. Es können also ohne spezielle Anforderungen an den Sensor die gängigen Hygienebestimmungen eingehalten werden, beispielsweise kann ein spaltfreier Übergang zwischen der Komponente und der Wandung des ersten Kanals gewährleistet werden.

Der Rohradapter umfasst im Bereich des ersten Kanals zwei weitere Öffnungen, beispielsweise zum Einbringen des Rohradapters in ein bestehendes Rohrleitungssystem. Diese beiden Öffnungen sind im Falle eines geraden Rohrleitungsabschnitts üblicherweise entlang einer gemeinsamen Längsachse des Rohrleitungsabschnitts angeordnet. Die vorliegende Erfindung ist jedoch keinesfalls auf derartige Rohrleitungsabschnitte begrenzt. Vielmehr kann der Rohrleitungsabschnitt auch zumindest ein gebogenes Segment aufweisen.

Zur Befestigung des Rohrleitungsabschnittes in einem bestehenden Rohrleitungssystem sind alle dem Fachmann allgemein bekannten Befestigungsweisen denkbar, wie beispielsweise Flansch-, Schweiß- oder Klemmverbindungen. Die Länge der Kanäle bzw. die Dimensionierung des Rohrleitungsabschnitts ist jeweils an eine gewünschte Anwendung anpassbar. So kann es für manche Anwendungen beispielsweise vorteilhaft, die Länge des ersten Kanals zu minimieren.

Es sei ferner darauf verwiesen, dass es sich bei dem erfindungsgemäßen Rohradapter sowohl um ein einstückig hergestelltes als auch um ein aus mehreren Komponenten zusammengefügtes Bauelement handeln kann. Dies kann je nach eingesetztem Herstellungsverfahren variieren. Beispielsweise kann es sich bei dem Rohradapter, oder zumindest einzelner Komponenten des Rohradapters um gedrehte und/oder gefräste Bauteile handeln. Einzelne Komponenten können beispielsweise auch miteinander verschweißt werden. Aber auch andere geeignete dem Fachmann hinlänglich bekannte Fertigungsverfahren, beispielsweise generative, oder auch additive, Fertigungsverfahren sind zur Herstellung eines erfindungsgemäßen Rohradapters möglich. Im Falle eines generativen, oder auch additiven Fertigungsverfahrens, wie beispielsweise einem 3D-Druck-Verfahren, werden die Bauteile in einem Urformprozess erzeugt. Solche generativen Fertigungsverfahren, welche im Prinzip eine industrialisierte und massentaugliche Weiterentwicklung des sogenannten Rapid Prototyping darstellen, halten seit einigen Jahren zunehmend Einzug in der industriellen Fertigung. Die gängigen, unterschiedlichen Herstellungsverfahren sind dem Fachmann bestens bekannt und werden deswegen an dieser Stelle nicht im Detail erläutert.

In einer Ausgestaltung ist in einem Endbereich des zweiten Kanals, insbesondere im Bereich einer weiteren Öffnung des zweiten Kanals, ein Gewinde in eine Wandung des zweiten Kanals eingebracht. Mittels des Gewindes kann ein Messgerät oder eine Komponente eines Messgeräts in dem Rohradapter lösbar eingebracht werden.

In einer weiteren Ausgestaltung ist ein Volumen und/oder eine Geometrie zumindest einer Ausformung in Abhängigkeit eines Durchmessers des ersten und/oder zweiten Kanals gewählt. Vorzugsweise ist das Volumen der Ausformung zudem derart an einen Durchmesser einer in den zweiten Kanal eingebrachten Vorrichtung zur Bestimmung und/oder Überwachung einer Prozessgröße angepasst. Insbesondere wird das Volumen der Ausformung derart gewählt, dass die in den zweiten Kanal eingebrachte Komponente im Wesentlichen frontbündig mit einer Wandung des ersten Kanals im Übergangsbereich abschließt.

Um unabhängig von den Durchmessern des ersten und zweiten Kanals Toträume und/oder Spalte im Übergangsbereich zu verhindern, müssen die Volumina und ggf. die Geometrie der Ausformungen geeignet angepasst werden. Die Beschaffenheit der Übergänge hängt von den Durchmessern der beiden Kanäle ab. So sind bei unterschiedlichen Durchmessern der beiden Kanäle andere geometrische Beschaffenheiten der Übergangsbereiche zu berücksichtigen, als im Falle identischer Durchmesser der beiden Kanäle.

Eine bevorzugte Ausgestaltung beinhaltet, dass der Rohradapter einen dritten, rohrförmigen Kanal umfasst, welcher in einem zweiten vorgebbaren Winkel zum ersten Kanal angeordnet, und mit dem ersten Kanal verbunden ist. Bevorzugt verlaufen die Längsachsen des zweiten und dritten Kanals parallel zueinander, insbesondere fluchten sie miteinander, so dass sich der zweite und dritte Kanal relativ zum ersten Kanal gegenüberliegen. In diesem Falle können beispielsweise zwei Messgeräte oder zwei Komponenten von einem oder zwei Messgeräten in den Rohradapter eingebracht werden.

Es ist von Vorteil, wenn die beiden Ausformungen bezogen auf eine Querschnittsfläche des zweiten Kanals einander gegenüberliegend angeordnet sind. Es ist ebenfalls von Vorteil, wenn die beiden Ausformungen bezogen auf eine Längsachse des ersten Kanals einander gegenüberliegend angeordnet sind. In diesen Bereichen ist das Bilden von Ablagerungen oder Entstehen von Toträumen besonders wahrscheinlich.

Schließlich ist es von Vorteil, wenn eine erste Vergrößerung eines Durchmessers des ersten Kanals aufgrund der ersten Ausformung und eine zweite Vergrößerung eines Durchmessers des ersten Kanals aufgrund der zweiten Ausformung, insbesondere im Übergangsbereich, unterschiedlich groß sind. Auf diese Weise kann beispielsweise das Ausbilden eines Siphons in den Übergangsbereichen der beiden Kanäle verhindert werden. Dies betrifft insbesondere den Fall, dass der zweite Kanal horizontal ausgerichtet ist. Dies entspricht einem horizontalen bzw. seitlichen Einbau der jeweiligen Vorrichtung zur Bestimmung und/oder Überwachung einer Prozessgröße. Für diesen Fall einer horizontalen Ausrichtung des zweiten Kanals weist vorzugsweise die unterhalb des ersten Kanals angeordnete erste Ausformung ein kleineres Volumen auf als die oberhalb des zweiten Kanals angeordnete zweite Ausformung.

In noch einer Ausgestaltung des Rohradapters ist zumindest in einem Randbereich zumindest einer Ausformung ein Verlängerungsbereich vorgesehen, welcher sich insbesondere tangential an die Ausformung anschließt. Der Verlängerungsbereich kann auch derart ausgestaltet sein, dass er die beiden Ausformungen miteinander verbindet.

Die der vorliegenden Erfindung zugrundeliegende Aufgabe wird ferner gelöst durch eine Anordnung zur Bestimmung und/oder Überwachung zumindest einer Prozessgröße eines Mediums in einer Rohrleitung, umfassend
- eine Vorrichtung zur Bestimmung und/oder Überwachung der zumindest einen Prozessgröße, und
- einen erfindungsgemäßen Rohradapter.

Zumindest eine Komponente der Vorrichtung ist in den zweiten Kanal des Rohradapters einbringbar oder eingebracht. In einer Ausgestaltung handelt es sich bei der zumindest einen Komponente des Messgeräts um eine Komponente eines Sensorelements. Insbesondere handelt es sich bei der Komponente um eine Komponente, welche im fortlaufenden Betrieb des Messgeräts zumindest zeitweise und/oder teilweise, insbesondere im Bereich einer Stirnfläche, prozessberührend, also mediumsberührend, ist. In dieser Hinsicht ist es von Vorteil, wenn der Rohradapter eine Befestigungseinheit, insbesondere ein Gewinde, zur Befestigung der zumindest einen Komponente an oder in dem Rohradapter umfasst. Die Befestigungseinheit ist dabei bevorzugt im dem ersten Kanal abgewandten Endbereich des zweiten Kanals angeordnet sein.

Da die Vorrichtung bzw. die Komponente der Vorrichtung durch das Einbringen der Ausformungen in den Rohradapter im Wesentlichen frontbündig mit der Wandung des ersten Kanals abschließt, beschränkt sich der Kontaktbereich zwischen der Vorrichtung und dem Medium vorteilhaft auf diese Fläche. Die frontbündige Anordnung gewährleistet somit eine im Wesentlichen rückstandsfreie Reinigung der Anordnung, was insbesondere für Anwendungen in der sterilen Verfahrenstechnik relevant ist.

Der zweite und ggf. der dritte Kanal ist/sind vorteilhaft derart dimensioniert, dass die Vorrichtung bzw. die Komponente der Vorrichtung, welche in den zweiten Kanal eingebracht wird, passgenau in diesen einbringbar ist. Im Falle einer zylindrischen Ausgestaltung der Vorrichtung bzw. der Komponente weist also auch der zweite Kanal eine zylinderförmige Geometrie auf, wobei die Querschnittsfläche an die Dimensionierung der Vorrichtung bzw. der Komponente der Vorrichtung angepasst ist. In einer Ausgestaltung kann es sich bei dem zweiten Kanal auch um zumindest einen Teil eines Gehäuses der Komponente handeln.

In einer Ausgestaltung der Anordnung ist ein Übergang zwischen dem Rohradapter und der Vorrichtung im Bereich des ersten Kanals im Wesentlichen spaltfrei und/oder totraumfrei. Die Vorrichtung oder die Komponente schließt also im in den zweiten Kanal eingebrachten Zustand im Wesentlichen frontbündig mit der Wandung des ersten Kanals ab. Zwischen der Vorrichtung bzw. Komponente und der Wandung des ersten Kanals können sich entsprechend vorteilhaft keine Ablagerungen oder Verschmutzungen anreichern.

Die Vorrichtung oder Komponente kann beispielsweise mittels eines Dichtelements in den zweiten Kanal eingebracht sein. Hierbei ist es von Vorteil, wenn es sich bei dem Dichtelement um einen O-Ring handelt.

Eine weitere Ausgestaltung sieht vor, dass es sich bei der Vorrichtung um ein kapazitives und/oder konduktives Messgerät handelt. Das Sensorelement der Vorrichtung umfasst dann zumindest eine erste Elektrode und zumindest eine elektrisch von der ersten Elektrode isolierte zweite Elektrode aus. Die zweite Elektrode wird allgemein hin auch als Guard-Elektrode bezeichnet. Es handelt sich in dieser Ausgestaltung also um einen frontbündigen, kapazitiven und/oder konduktiven Sensor, welcher bevorzugt zur Detektion eines vorgebbaren Füllstands, oder der Leitfähigkeit des Mediums eingesetzt wird. Derartige, auch als Multisensoren bezeichnete, Sensoren sind beispielsweise aus den Dokumenten DE102011004807A1, DE102013102055A1, oder auch DE102013104781A1 beschrieben, auf welche hiermit vollumfänglich Bezug genommen wird. Ein entsprechender Sensor wird weiterhin von der Anmelderin unter der Bezeichnung FTW33 hergestellt und vertrieben.

Bei der zumindest einen Komponente des Messgeräts handelt es sich dann bevorzugt um die Elektrodenbaugruppe mit einer, insbesondere kreisförmigen, Stirnfläche, wobei zumindest eine Elektrode der Elektrodenbaugruppe im Wesentlichen mit der Stirnfläche abschließt. Die Stirnfläche kann sowohl planar als auch zumindest teilweise gewölbt ausgestaltet sein. Im in den Rohradapter eingebrachten Zustand schließt die Elektrodenbaugruppe vorteilhaft im Wesentlichen frontbündig mit der Wandung des ersten Kanals ab.

Es kann sich aber ebenfalls um eine andere Gattung von Messgerät handeln. Ein weiteres Beispiel für ein Messgerät ist beispielsweise eine Vorrichtung zur Bestimmung und/oder Überwachung des Drucks eines Mediums.

Die der Erfindung zugrunde liegende Aufgabe wird ferner gelöst durch ein Verfahren zur Herstellung eines erfindungsgemäßen Rohradapters umfassend folgende Verfahrensschritte:
- Bereitstellen eines Rohrleitungsabschnitts mit einem rohrförmigen, ersten Kanal und einem rohrförmigen zweiten Kanal, welcher in einem ersten vorgebbaren Winkel zum ersten Kanal angeordnet und mit dem ersten Kanal verbunden ist, und
- Fräsen von zumindest zwei Ausformungen in eine Wandung des ersten und/oder zweiten Kanals in einem Übergangsbereich zwischen einer Wandung des ersten und einer Wandung des zweiten Kanals.

Vorteilhaft lassen sich die zumindest zwei Ausformungen nach Herstellung des Rohrleitungsabschnitts in den Übergangsbereich zwischen den beiden Kanälen einfräsen. So können einerseits bestehende Rohradapter mit zwei verbunden Kanälen nachträglich bearbeitet werden und somit für eine Verwendung in der sterilen Verfahrenstechnik ausgebildet werden. Aber auch bei der vollständigen erfindungsgemäßen Fertigung eines erfindungsgemäßen Rohradapters ergeben sich verschiedene Vorteile. In einem ersten Fertigungsschritt werden die beiden Kanäle in einen Rohrleitungsabschnitt eingebracht. Hierfür sind keine besonderen Maßnahmen erforderlich, so dass beispielsweise Drehverfahren zur Einbringung der Kanäle verwendet werden können. Eine derartige Fertigung ist schnell und einfach zu realisieren und bedarf nur einem geringen Aufwand. In einem zweiten Arbeitsschritt werden dann die zumindest zwei Ausformungen eingebracht. Hierzu kann ein Fräser vorteilhaft durch eine Öffnung des Rohradapters in denselben eingeführt werden, um eine Ausformung zu fräsen. Somit kann auch die Anpassung der Geometrie im Innenvolumen des Rohradapters zur Gewährleistung einer Verwendung im Bereich der sterilen Verfahrenstechnik auf einfache Art und Weise realisiert werden. Es bedarf keiner komplexen und aufwendigen, vielstufigen Fertigungsabläufe.

Es ist von Vorteil, wenn zum Fräsen ein Kugelfräser und/oder ein Kreissegmentfräser verwendet wird. Mit derartigen Fräsern lässt sich auf besonders einfache Weise eine Ausformung in den Übergangsbereich einbringen. Insbesondere kann eine sichelförmige Ausformung eingebracht werden.

Es ist ebenfalls von Vorteil, wenn ein Werkzeug, insbesondere ein Schnitt- oder Zerspanungswerkzeug, zum Fräsen der zumindest zwei Ausformungen durch eine erste und/oder zweite Öffnung des ersten Kanals, welche zum Einbringen des Rohradapters in die Rohrleitung dient, oder durch eine Öffnung des zweiten Kanals, in ein Innenvolumen des Rohradapters eingebracht wird. Durch das Einbringen des Fräsers durch die Öffnung des zweiten Kanals kann beispielsweise eine zusammenhängende Rotationsfläche, und damit mehrere, insbesondere voneinander getrennte Ausformungen, hergestellt werden. Beim Einbringen des Fräsers durch zumindest eine Öffnung des ersten Kanals ist es wiederum beispielsweise einerseits möglich, dass während des gesamten Fräsvorgangs einer Ausformung der Fräser durch dieselbe Öffnung in den ersten Kanal eingebracht wird. Es ist aber ebenso denkbar, dass der Fräser zur Herstellung einer Ausformung zeitweise durch unterschiedliche Öffnungen, insbesondere des ersten Kanals, eingebracht wird.

Eine bevorzugte Ausgestaltung des Verfahrens beinhaltet, dass zur Herstellung der Ausformung eine gedachte Leitkurve festgelegt wird, welche insbesondere zwei, insbesondere spiegelgleiche geradlinige Abschnitte aufweist, welche durch einen gekrümmten Abschnitt miteinander verbunden sind. In diesem Falle entspricht die Oberfläche der Ausformung der Geometrie der Leitkurve.

Die im Zuge des erfindungsgemäßen Rohradapters angegebenen Ausführungsformen sind jeweils mutatis mutandis auch auf die erfindungsgemäße Anordnung und das erfindungsgemäße Verfahren anwendbar und umgekehrt.

Die Erfindung wird nachfolgend anhand der Figuren Fig. 1 - Fig. 7 näher erläutert. Es zeigt:
Fig. 1 eine schematische Darstellung eines frontbündigen kapazitiven und/oder konduktiven Sensors gemäß Stand der Technik,
Fig. 2: einen Rohradpater gemäß Stand der Technik,
Fig. 3: drei mögliche Ausgestaltungen eines erfindungsgemäßen Rohradapters mit zwei Ausformungen,
Fig. 4: zwei Schnittdarstellungen eines Rohradapters ohne (a) und mit (b) Ausformungen zur Illustrierung des Effekts der Ausformungen,
Fig. 5 eine Ausgestaltung des erfindungsgemäßen Rohradapters mit einem zweiten und einem dritten Kanal,
Fig. 6 eine schematische Illustration des Herstellungsverfahrens mittels eines Fräsvorgangs entlang einer gedachten Leitkurve, und
Fig. 7 eine mögliche Ausgestaltung eines erfindungsgemäßen Rohradapters mit zwei Ausformungen und zwei Verbindungsbereichen.

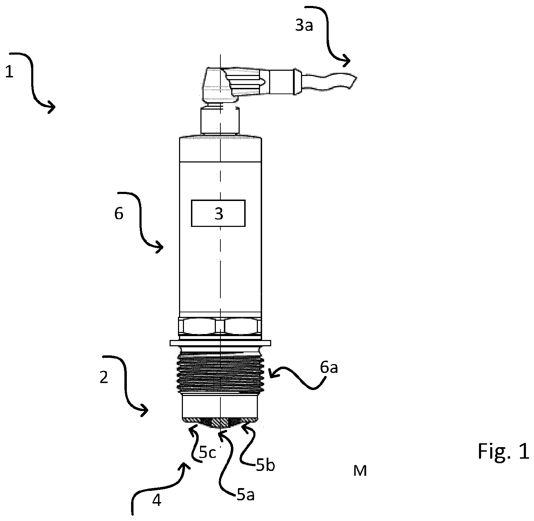

Die vorliegende Erfindung ist auf eine Vielzahl unterschiedlicher Sensoren 1 anwendbar. Ohne Beschränkung der Allgemeinheit bezieht sich die nachfolgende Beschreibung jedoch der Einfachheit halber auf den Fall eines frontbündigen kapazitiven und/oder konduktiven Sensors 1, wie in Fig. 1 schematisch dargestellt. Weiterhin ist die vorliegende Erfindung für eine Vielzahl unterschiedlicher Ausgestaltungen, insbesondere Geometrien, für den Rohradapter 7 einsetzbar. Ebenso ohne Beschränkung der Allgemeinheit bezieht sich die nachfolgende Beschreibung der Einfachheit halber jedoch ausschließlich auf einen T-förmigen Rohradapter 7. Die Überlegungen lassen sich jeweils analog auf andere Messgeräte 1 und andere Ausgestaltungen des Rohradapters 7 anwenden.

Die einem kapazitiven und/oder konduktiven Messgerät, insbesondere einem Füllstandmessgerät, zugrundeliegenden Messfahren sind an sich aus dem Stand der Technik bekannt. Entsprechende Feldgeräte werden von der Anmelderin beispielsweise unter dem Begriff LIQUIPOINT hergestellt und vertrieben. Eine schematische Darstellung eines entsprechenden Messgeräts 1 ist in Fig. 1 gezeigt. Der Sensor 1 umfasst eine Sensoreinheit 2, welche, wenn das Feldgerät 1 in eine Rohrleitung eingebracht wird, im Wesentlichen frontbündig mit der Rohrleitung abschließt, sowie eine Elektronikeinheit 3, welche über ein Anschlusskabel 3a beispielsweise mit einer externen Einheit (hier nicht gezeigt) lösbar verbindbar ist.

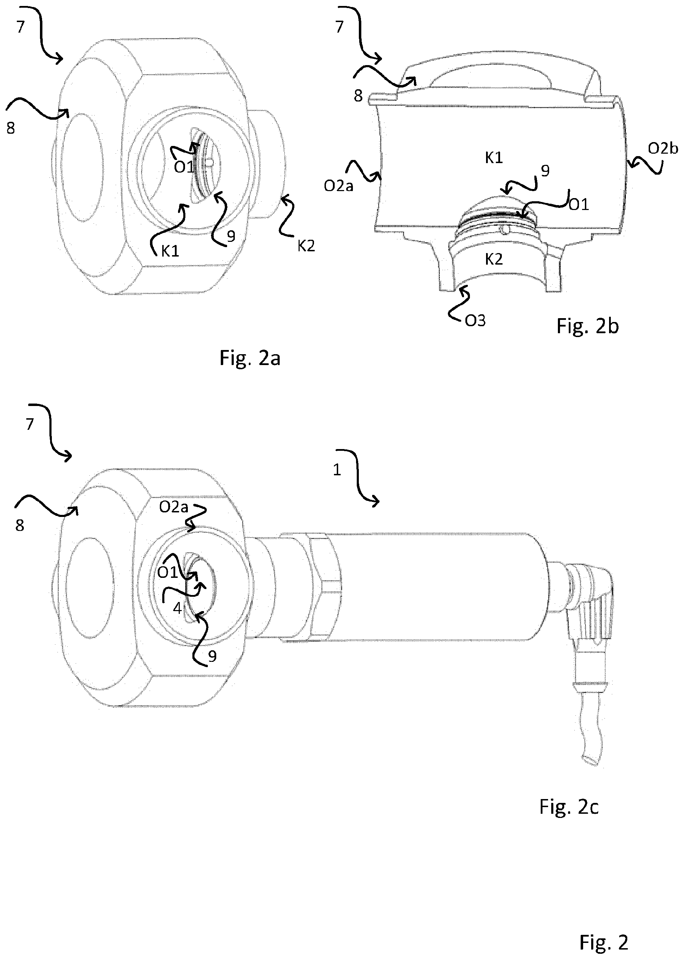

Die Sensoreinheit 2 ist im Wesentlichen koaxial aufgebaut und umfasst eine Elektrodenbaugruppe 4, welche in dem gezeigten Beispiel eine Messelektrode 5a, eine Guardelektrode 5b und eine Masseelektrode 5c umfasst. Es sind jedoch auch Elektrodenbaugruppen 4 mit weniger oder mehr Elektroden 5a-5c möglich. An die Elektrodenbaugruppe 4 schließt sich ein Gehäuse 6 an, in welchem unter anderem die Elektronikeinheit 3 angeordnet ist. Ferner dient der Prozessanschluss 6a zur lösbaren Befestigung des Sensors 1 an einem Prozessanschluss oder einem Rohradapter 7, wie in den Figuren Fig. 2 bis Fig. 7 dargestellt.

In Fig. 2 ist ein Rohradapter 7 für eine Rohrleitung [nicht dargestellt] mit einem Rohrleitungsabschnitt 8 gemäß Stand der Technik dargestellt, der einen rohrförmigen, ersten Kanal K1 zum Einbringen des Rohrleitungsabschnitts 8 in die Rohrleitung und einem rohrförmigen zweiten Kanal K2, welcher senkrecht zum ersten Kanal K1 angeordnet und mit dem ersten Kanal K1 verbunden ist. Fig. 2a zeigt eine perspektivische Ansicht und Fig. 2b eine Schnittdarstellung des Rohradapters 7. Fig. 2c zeigt denselben Rohradapter 7 mit einem in den zweiten Kanal K2 eingebrachtem Messgerät 1 wie es in Fig. 1 dargestellt ist.

Beide Kanale K1 und K2 haben kreisrunde Querschnittflächen. Entsprechend ist auch eine Umfangslinie im Bereich der Öffnung O1 zwischen dem ersten K1 und zweiten Kanal K2 gewölbt ausgebildet. Wird eine Sensor 1 wie in Fig. 1 dargestellt, im zweiten Kanal K2 befestigt, können im Übergangsbereich zwischen der dem Medium M zugewandten Oberfläche der Elektrodenbaugruppe 4 und der Wandung des ersten Kanals K1 Toträume entstehen. Die in die Öffnung O1 eingebrachte Elektrodenbaugruppe 4 weist nämlich in der Regel eine andere Geometrie auf als der die Öffnung O1 umgebende Teilbereich der Wandung des ersten Kanals K1. Als Folge können sich leicht Ablagerungen und/oder Medienrückstände innerhalb des Rohradapters 7, insbesondere im Übergangsbereich 9 zwischen der Stirnfläche der Elektrodenbaugruppe 4 des Sensors 1 und der Wandung des ersten Kanals K1 bilden. Eine Verwendung einer derartigen Anordnung im Bereich der sterilen Verfahrenstechnik ist entsprechend nicht ohne weiteres möglich.

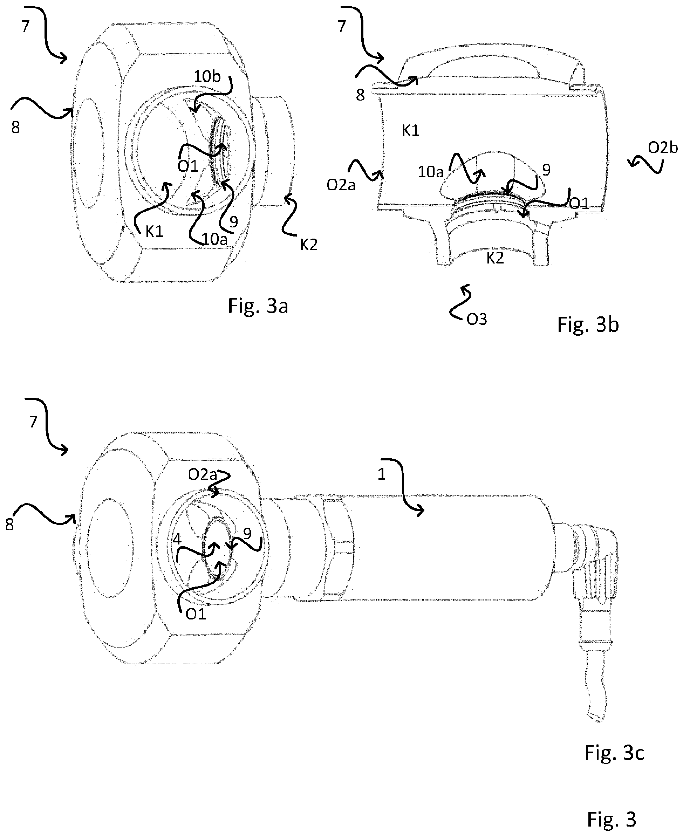

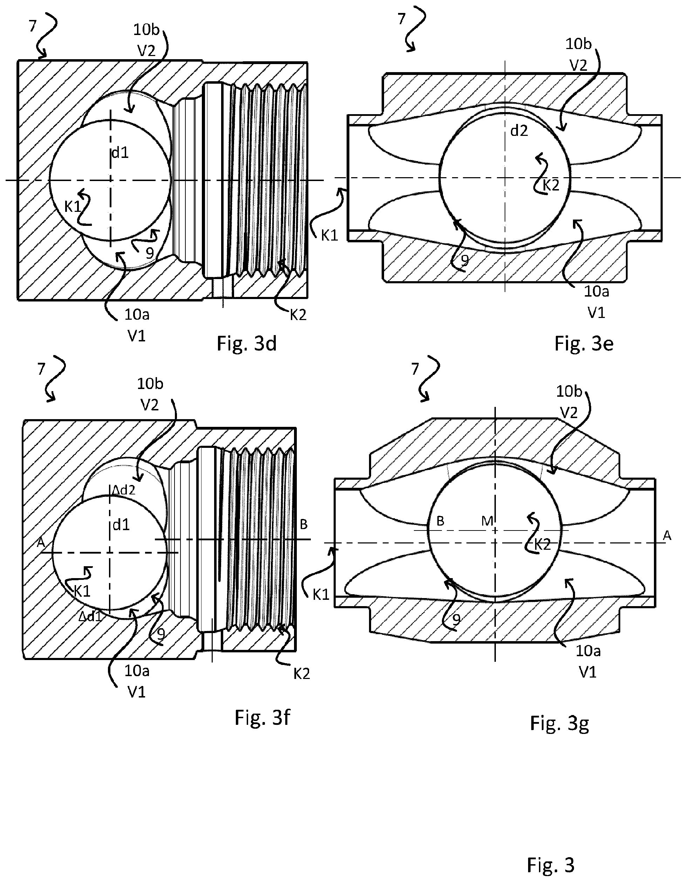

Um dieser Problematik zu umgehen, ist erfindungsgemäß in einem Übergangsbereich zwischen der Wandung des ersten K1 und der Wandung des zweiten Kanals K2 zumindest eine Ausformung A1 in eine Wandung des ersten K1 und/oder zweiten Kanals K2 eingebracht, wie in den Figuren Fig. 3 - Fig. 7 dargestellt.

Ein Rohradapter 7 mit zwei Ausformungen 10a und 10b ist in Fig. 3 dargestellt. Wie im Falle der Fig. 2 ist eine perspektivische (a), eine Schnitt- und eine Darstellung mit in den zweiten Kanal K2 eingebrachtem Sensor 1 (c) gezeigt. Im Unterschied zu der in Fig. 2 gezeigten Variante für einen Rohradapter 7 sind für den Rohradapter 7 aus Fig 3 zwei Ausformungen 10a und 10b im Übergangsbereich 9 zwischen dem ersten K1 und zweiten Kanal K2 eingebracht.

Die Volumina V1, V2 und/oder Geometrien der Ausformungen 10a, 10b können jeweils in Abhängigkeit eines Durchmessers d1 des ersten K1 und/oder eines Durchmessers d2 des zweiten Kanals K2 gewählt werden. Vorzugsweise findet insbesondere eine Anpassung der Volumina V1 und V2 und/oder Geometrien für den Fall statt, dass die beiden Durchmesser d1 und d2 der beiden Kanäle unterschiedlich groß sind, wie beispielhaft in der Ausgestaltung gemäß der Figuren Fig. 3d und Fig. 3e dargestellt. Für die gezeigte Variante ist ein Durchmesser d1 des ersten Kanals K1 kleiner als ein Durchmesser d2 des zweiten Kanals K2. Um auch für diesen Fall einen im Wesentlichen frontbündigen Einbau einer hier nicht dargestellten Vorrichtung zur Bestimmung und/oder Überwachung einer Prozessgröße gewährleisten zu können, kann wie folgt vorgegangen werden: Das Verhältnis zwischen den Volumina V1 und V2 und einer Querschnittsfläche des ersten Kanals K1 wird umso größer gewählt, je kleiner der Durchmesser d1 und/oder umso größer das Verhältnis der Durchmesser d1 und d2 der beiden Kanäle K1, K2 ist.

Erfindungsgemäß werden die Volumina V1 und V2 der beiden Ausformungen 10a und 10b unterschiedlich groß gewählt, wie in den Figuren Fig. 3f und Fig. 3g illustriert. Die beiden gezeigten Darstellungen betreffen den Fall eines horizontalen Einbaus des jeweiligen Sensors. Für diesen Fall kann durch dieses Vorgehen das Ausbilden eines Siphons vermieden werden.

Die Volumina V1 und V2 sind so gewählt, dass eine erste Vergrößerung Δd1 des Durchmessers d1 des ersten Kanals K1 aufgrund der ersten Ausformung 10a und eine zweite Vergrößerung Δd2 des Durchmessers d1 des ersten Kanals K1 aufgrund der zweiten Ausformung 10b, insbesondere im Übergangsbereich 9, unterschiedlich groß sind. Hierdurch kommt es im Übergangsbereich 9 zwischen dem ersten K1 und zweiten Kanal K2 zu einer Parallelverschiebung einer durch den Mittelpunkts M des ersten Durchmessers d1 verlaufenden, horizontalen Achse B relativ zu einer zentrischen, horizontalen Achse A des zweiten Kanals K2. Horizontal bedeutet in diesem Zusammenhang, dass die jeweilige Achse parallel zu einer Längsachse durch den zweiten Kanal ist.

Für die gezeigte erfindungsgemäße Anordnung ist das Volumen V1 der ersten, im unteren Bereich des zweiten Kanals K2 verlaufenden, Ausformung 10a kleiner als das Volumen V2 der oberhalb des zweiten Kanals K2 verlaufenden, zweiten Ausformung 10b. Auf diese Weise kann eine Vertiefung der unteren Wandung des zweiten Kanals K2, also der Wandung im Bereich der zweiten Ausformung 10a, relativ zu den außerhalb des Übergangsbereichs 9 angeordneten Teilbereichen der unteren Wandung des zweiten Kanals K2 vermieden und dadurch das Ausbilden eines Siphons im unteren Übergangsbereich 9 verhindert werden. Ein solcher Siphon bzw. das Vorhandensein von Medium M in dem Siphon kann nämlich zu Verfälschungen bei der Erfassung der jeweiligen Prozessgröße mittels eines in den zweiten Kanal K2 eingebauten Messgeräts führen, welche durch die asymmetrische Ausgestaltung der beiden Ausformungen 10a, 10b vermieden werden kann.

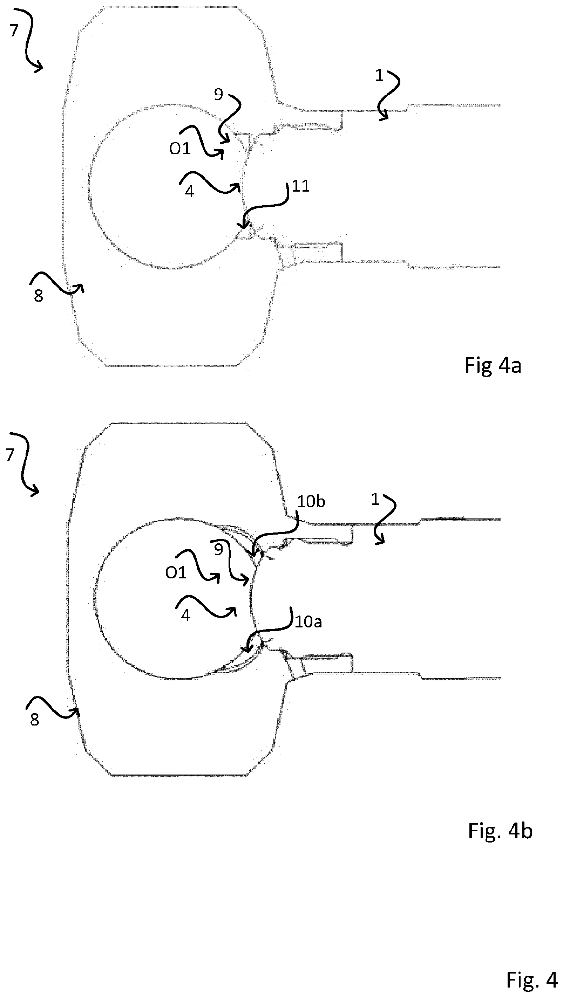

In allen in Fig. 3 dargestellten Ausgestaltungen sorgen die Ausformungen 10a und 10b jeweils dafür, dass Ablagerungen nicht in den Übergangsbereichen 9 anhaften können. Dieser Effekt ist in Fig. 4 nochmals verdeutlicht.

Fig. 4a zeigt eine weitere Schnittdarstellung eines Rohradapters 7 ohne (a) und mit (b) den zwei Ausformungen 10a und 10b, entspricht also den in Fig. 2 (a) und Fig. 3 (b) gezeigten Ausführungen. Für den Fall Fig. 4a ergeben sich im Übergangsbereich 9 Toträume 11 aufgrund der unterschiedlichen Geometrien des Rohradapters 7 im Übergangsbereich und des Sensors 1 im Bereich der Elektrodenbaugruppe 4. Im Falle der Fig. 4b dagegen sorgen die beiden sichelförmigen Ausformungen 10a und 10b für einen im Wesentlichen spalt- und totraumfreie Übergangsbereich 9.

Es sei darauf verwiesen, dass die vorliegende Erfindung jedoch keineswegs auf Ausgestaltungen mit zwei Ausformungen 10a und 10b beschränkt ist. Vielmehr sind zahlreiche Ausgestaltungen mit unterschiedlich vielen, jedoch zumindest einer Ausformung 10 möglich und fallen ebenso unter die vorliegende Erfindung. Ferner ist die vorliegende Erfindung auch keineswegs auf solche Geometrien der Ausformungen 10 beschränkt, wie sie in den Figuren Fig. 3 und Fig. 4 dargestellt sind. Es kommen vielmehr auch beliebige andere Geometrien in Frage und fallen unter die vorliegende Erfindung.

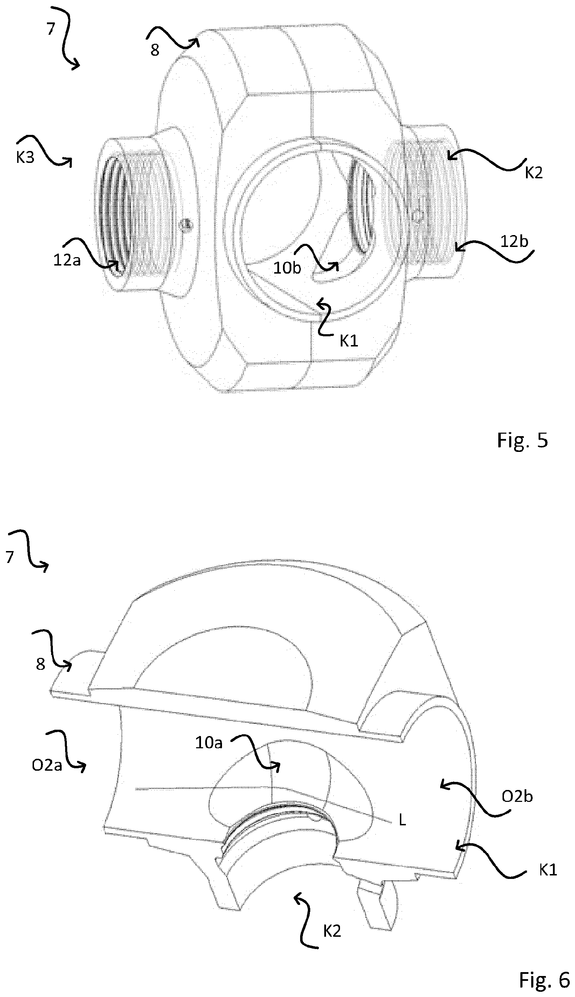

In Fig. 5 ist eine weitere Ausgestaltung eines erfindungsgemäßen Rohradapters 7 gezeigt, welcher einen zweiten K2 und einen dritten Kanal K3 aufweist. Der zweite K2 und dritte Kanal K3 sind einander gegenüberliegend angeordnet und fluchten miteinander. Im Bereich der Innenwandungen des zweiten K2 und dritten Kanals K3 ist ferner jeweils ein Innengewinde 12a und 12b eingebracht, welches der Befestigung des Sensors 1 im jeweiligen Kanal K2 und K3 dient. Im Übrigen entspricht die Ausgestaltung aus Fig. 5 der in den Figuren Fig. 3 und Fig. 4 gezeigten Ausgestaltungen mit zwei Ausformungen 10a und 10b jeweils für den zweiten K2 und dritten Kanal K3.

In Fig. 6 ist die Herstellung der beiden Ausformungen 10a und 10b illustriert. Das jeweils verwendete Werkzeug, insbesondere ein Schnitt- oder Zerspanungswerzeug, wird durch eine der Öffnungen O2a, O2b in den Rohradapter 7 eingeführt. Das Werkzeug wird derart geführt, dass die Oberfläche jeder der beiden Ausformungen 10a und 10b jeweils der Leitkurve L folgt. Verwendet man zum Fräsen der Ausformungen 10a und 10b einen Kugelfräser, so ergibt sich beispielsweise auf einfache Art und Weise eine sichelförmige Geometrie der Ausformungen 10a und 10b. Aber auch andere Geometrien für die Ausformungen 10a und 10b sind möglich und beispielsweise ebenfalls durch Festlegen einer Leitkurve L herstellbar.

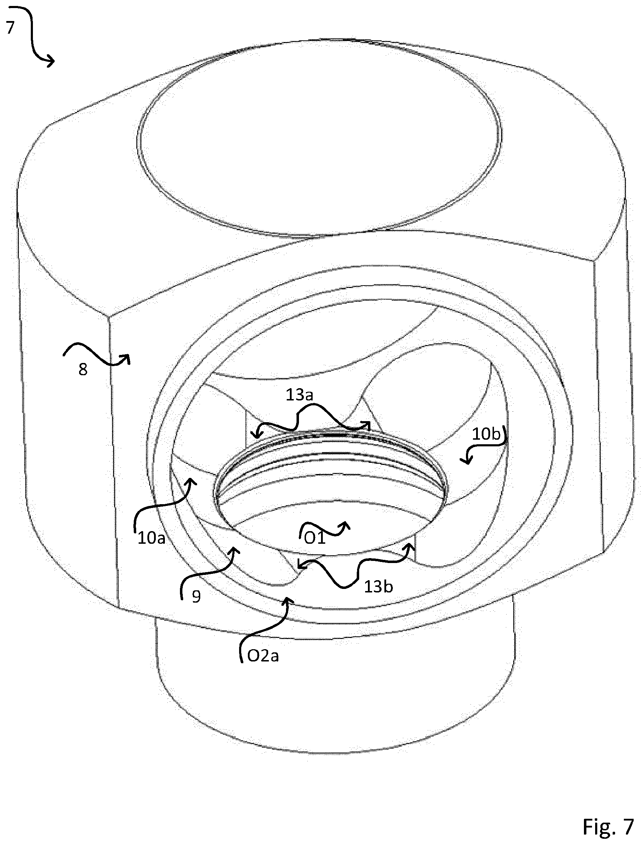

In Fig. 7 ist schließlich noch eine weitere Ausgestaltung für einen erfindungsgemäßen Rohradapter 7 mit zwei Ausformungen 10a und 10b dargestellt, wobei sich an die beiden Ausformungen 10a und 10b zwei Verlängerungsbereiche 13a und 13b, welche in den Randbereichen der beiden Ausformungen 10a und 10b angeordnet sind, anschließen. Durch diese Maßnahme kann die Beschaffenheit des Übergangsbereichs 9 noch weiter hinsichtlich der Erfüllung der Hygieneanforderungen weiter verbessert werden.

Abschließend sei darauf verwiesen, dass die Länge der Kanäle K1-K3 je nach Anwendung variieren kann. So kann es sich für manche Anwendungen anbieten, die Kanäle K1-K3 zumindest teilweise bezüglich ihrer Länge zu minimieren. Auch kann die Länge der Kanäle K1-K3 in Abhängigkeit der Art und Weise, wie der Rohradapter 7 in der jeweiligen Rohrleitung befestigt wird, variieren. Zur Befestigung des Rohradapters 7 in einer Rohrleitung im Bereich der beiden Öffnungen O2a und O2b des ersten Kanals sind dabei alle dem Fachmann bekannten Befestigungsweisen, insbesondere Klemmanschlüsse, denkbar und fallen unter die vorliegende Erfindung.

### Bezugszeichenliste

- 1: kapazitiver/konduktiver Sensor
- 2: Sensoreinheit
- 3: Elektronikeinheit
- 4: Elektrodenbaugruppe
- 5 a-5c: Elektroden
- 6: Gehäuse
- 6a: Prozessanschluss
- 7: Rohradapter
- 8: Rohrleitungsabschnitt
- 9: Übergangsbereich
- 10,10a,10b: Ausformungen
- 11: Toträume
- 12,12a,12b: Gewinde
- 13, 13a, 13b: Verbindungsbereich

- K1,K2,K3: Kanäle
- 01,02,03: Öffnungen
- L: Leitkurve
- M: Medium

## Patentansprüche

1. Rohradapter (7) für eine Rohrleitung zum Führen eines Mediums (M), umfassend einen Rohrleitungsabschnitt (8) mit einem rohrförmigen, ersten Kanal (K1) zum Einbringen des Rohrleitungsabschnitts (8) in die Rohrleitung, und einem rohrförmigen zweiten Kanal (K2), welcher in einem ersten vorgebbaren Winkel zum ersten Kanal (K1) angeordnet und mit dem ersten Kanal (K1) verbunden ist, wobei in einem Übergangsbereich (9) zwischen einer Wandung des ersten Kanals (K1) und einer Wandung des zweiten Kanals (K2) zumindest zwei Ausformungen (10a, 10b) in eine Wandung des ersten (K1) und/oder zweiten Kanals (K2) eingebracht sind,
wobei die zwei Ausformungen (10a, 10b) eine sichelförmige Geometrie aufweisen,
**dadurch gekennzeichnet,**
**dass** ein Volumen der ersten Ausformung (10a) und ein Volumen der zweiten Ausformung (10b) unterschiedlich groß sind.

2. Rohradapter nach Anspruch 1,
umfassend einen dritten, rohrförmigen Kanal (K3), welcher in einem zweiten vorgebbaren Winkel zum ersten Kanal (K1) angeordnet, und mit dem ersten Kanal (K1) verbunden ist.

3. Rohradapter (7) nach Anspruch 1 oder 2,
wobei die beiden Ausformungen (10a, 10b) bezogen auf eine Querschnittsfläche des zweiten Kanals (K2) einander gegenüberliegend angeordnet sind.

4. Rohradapter (7) nach einem der Ansprüche 1 bis 3,
wobei eine erste Vergrößerung (Δd1) eines Durchmessers (d1) des ersten Kanals (K1) aufgrund der ersten Ausformung (10a) und eine zweite Vergrößerung (Δd2) eines Durchmessers (d1) des ersten Kanals (K1) aufgrund der zweiten Ausformung (10b) unterschiedlich groß sind.

5. Rohradapter (7) nach einem der Ansprüche 1 bis 4,
wobei zumindest in einem Randbereich einer Ausformung (10a, 10b) ein Verlängerungsbereich (13) vorgesehen ist, welcher sich insbesondere tangential an die Ausformung (10a, 10b) anschließt.

6. Anordnung zur Bestimmung und/oder Überwachung zumindest einer Prozessgröße eines Mediums (M) in einer Rohrleitung,
umfassend
- eine Vorrichtung (1) zur Bestimmung und/oder Überwachung der Prozessgröße, und
- einen Rohradapter (7) nach einem der Ansprüche 1 bis 5.

7. Anordnung nach Anspruch 6,
wobei ein Übergang zwischen dem Rohradapter (7) und der Vorrichtung (1) im Bereich des ersten Kanals (K1) spaltfrei und/oder totraumfrei ist.

8. Verfahren zur Herstellung eines Rohradapters (7) nach einem der Ansprüche 1 bis 5,
umfassend folgende Verfahrensschritte:
- Bereitstellen eines Rohrleitungsabschnitts (8) mit einem rohrförmigen, ersten Kanal (K1) und einem rohrförmigen zweiten Kanal (K2), welcher in einem ersten vorgebbaren Winkel zum ersten Kanal (K1) angeordnet und mit dem ersten Kanal (K2) verbunden ist, und
- Fräsen von zumindest zwei Ausformungen (10a, 10b) in eine Wandung des ersten Kanals (K1) und/oder zweiten Kanals (K2) in einem Übergangsbereich (9) zwischen einer Wandung des ersten Kanals (K1) und einer Wandung des zweiten Kanals (K2).

9. Verfahren nach Anspruch 8,
wobei ein Kugelfräser und/oder ein Kreissegmentfräser verwendet wird.

10. Verfahren nach Anspruch 8 oder 9,
wobei ein Werkzeug zum Fräsen der Ausformungen (10a, 10b) durch eine erste Öffnung (O2a) und/oder eine zweite Öffnung (O2b) des ersten Kanals (K1) oder durch eine Öffnung des zweiten Kanals (K2) in ein Innenvolumen des Rohradapters (K1) eingebracht wird.

## Claims

1. Pipe adapter (7) for a pipe for guiding a medium (M),
comprising a pipeline section (8) with a tubular first channel (K1) for introducing the pipeline section (8) into the pipeline, and a tubular second channel (K2) which is arranged at a first predeterminable angle to the first channel (K1) and is connected to the first channel (K1),
wherein in a transition region (9) between a wall of the first channel (K1) and a wall of the second channel (K2) at least two formations (10a, 10b) are made in a wall of the first (K1) and/or second channel (K2),
wherein the two formations (10a, 10b) have a crescent-shaped geometry,
**characterized in**
**in that** a volume of the first shaping (10a) and a volume of the second shaping (10b) are of different sizes.

2. Pipe adapter according to claim 1,
comprising a third, tubular channel (K3), which is arranged at a second, predeterminable angle to the first channel (K1) and is connected to the first channel (K1).

3. Pipe adapter (7) according to claim 1 or 2,
wherein the two formations (10a, 10b) are arranged opposite one another in relation to a cross-sectional area of the second channel (K2).

4. Pipe adapter (7) according to one of claims 1 to 3,
wherein a first enlargement (Δd1) of a diameter (d1) of the first channel (K1) due to the first shaping (10a) and a second enlargement (Δd2) of a diameter (d1) of the first channel (K1) due to the second shaping (10b) are of different sizes.

5. Pipe adapter (7) according to any one of claims 1 to 4,
wherein an extension region (13) is provided at least in an edge region of a shaping (10a, 10b), which in particular adjoins the shaping (10a, 10b) tangentially.

6. Arrangement for determining and/or monitoring at least one process variable of a medium (M) in a pipeline,
comprising
- a device (1) for determining and/or monitoring the process variable, and
- a pipe adapter (7) according to any one of claims 1 to 5.

7. Arrangement according to claim 6,
wherein a transition between the tube adapter (7) and the device (1) in the region of the first channel (K1) is gap-free and/or free of dead space.

8. A method of manufacturing a pipe adapter (7) according to any one of claims 1 to 5,
comprising the following process steps:
- Providing a pipeline section (8) with a tubular first channel (K1) and a tubular second channel (K2), which is arranged at a first predeterminable angle to the first channel (K1) and is connected to the first channel (K2), and
- Milling of at least two formations (10a, 10b) in a wall of the first channel (K1) and/or second channel (K2) in a transition region (9) between a wall of the first channel (K1) and a wall of the second channel (K2).

9. Method according to claim 8,
whereby a ball end mill and/or a circular segment cutter is used.

10. Method according to claim 8 or 9,
wherein a tool for milling the formations (10a, 10b) is introduced into an inner volume of the tube adapter (K1) through a first opening (O2a) and/or a second opening (O2b) of the first channel (K1) or through an opening of the second channel (K2).

## Revendications

1. Adaptateur de tube (7) pour une conduite destinée à guider un fluide (M), comprenant une section de conduite (8) avec un premier canal tubulaire (K1) pour l'introduction de la section de conduite (8) dans la conduite, et un deuxième canal tubulaire (K2) qui est disposé selon un premier angle pouvant être prédéfini par rapport au premier canal (K1) et qui est relié au premier canal (K1),
dans lequel, dans une zone de transition (9) entre une paroi du premier canal (K1) et une paroi du deuxième canal (K2), au moins deux formations (10a, 10b) sont réalisées dans une paroi du premier canal (K1) et/ou du deuxième canal (K2), les deux formations (10a, 10b) présentant une géométrie en forme de croissant,
**caractérisé en ce que**
qu'un volume de la première conformation (10a) et un volume de la deuxième conformation (10b) sont de tailles différentes.

2. Adaptateur de tube selon la revendication 1,
comprenant un troisième canal tubulaire (K3), qui est disposé selon un deuxième angle prédéterminable par rapport au premier canal (K1), et qui est relié au premier canal (K1).

3. Adaptateur de tube (7) selon la revendication 1 ou 2,
les deux formations (10a, 10b) étant disposées en face l'une de l'autre par rapport à une surface de section transversale du deuxième canal (K2).

4. Adaptateur de tube (7) selon l'une quelconque des revendications 1 à 3,
dans lequel un premier agrandissement (Δd1) d'un diamètre (d1) du premier canal (K1) dû à la première conformation (10a) et un deuxième agrandissement (Δd2) d'un diamètre (d1) du premier canal (K1) dû à la deuxième conformation (10b) sont différents.

5. Adaptateur de tube (7) selon l'une quelconque des revendications 1 à 4,
une zone de prolongement (13) étant prévue au moins dans une zone de bord d'une conformation (10a, 10b), laquelle se raccorde en particulier tangentiellement à la conformation (10a, 10b).

6. Dispositif pour déterminer et/ou surveiller au moins une grandeur de processus d'un fluide (M) dans une conduite,
comprenant
- un dispositif (1) pour déterminer et/ou surveiller la grandeur de processus, et
- un adaptateur de tube (7) selon l'une quelconque des revendications 1 à 5.

7. Agencement selon la revendication 6,
une transition entre l'adaptateur de tube (7) et le dispositif (1) étant exempte de fente et/ou d'espace mort dans la zone du premier canal (K1).

8. Procédé de fabrication d'un adaptateur de roue brute (7) selon l'une des revendications 1 à 5,
comprenant les étapes de procédé suivantes :
- mise à disposition d'un tronçon de conduite (8) avec un premier canal tubulaire (K1) et un deuxième canal tubulaire (K2), qui est disposé selon un premier angle pouvant être prédéfini par rapport au premier canal (K1) et qui est relié au premier canal (K2), et
- le fraisage d'au moins deux formations (10a, 10b) dans une paroi du premier canal (K1) et/ou du deuxième canal (K2) dans une zone de transition (9) entre une paroi du premier canal (K1) et une paroi du deuxième canal (K2).

9. Procédé selon la revendication 8,
dans lequel on utilise une fraise sphérique et/ou une fraise à segment de cercle.

10. Procédé selon la revendication 8 ou 9,
dans lequel un outil pour fraiser les formations (10a, 10b) est introduit dans un volume intérieur de l'adaptateur de tube (K1) à travers une première ouverture (O2a) et/ou une seconde ouverture (O2b) du premier canal (K1) ou à travers une ouverture du second canal (K2).
